(19) Europäisches Patentamt

European Patent Office

Office européen des brevets

(11) EP 0 950 893 A2

(12) **EUROPÄISCHE PATENTANMELDUNG**

(43) Veröffentlichungstag:
20.10.1999 Patentblatt 1999/42

(51) Int. Cl.⁶: **G01N 21/64**

(21) Anmeldenummer: 99101240.2

(22) Anmeldetag: 22.01.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 14.04.1998 DE 19816487

(71) Anmelder:
BODENSEEWERK PERKıN-ELMER GMBH
D-88662 Überlingen (DE)

(72) Erfinder: **Wulf, Jürgen, Dr.**
88662 Überlingen (DE)

(74) Vertreter:
**Grünecker, Kinkeldey,
Stockmair & Schwanhäusser
Anwaltssozietät
Maximilianstrasse 58
80538 München (DE)**

(54) **Vorrichtung zum Nachweis eines Fluoreszenzfarbstoffs**

(57) Die Erfindung betrifft eine Vorrichtung zum Nachweis eines Fluorenszenzfarbstoffs in einer Probe, mit einer Strahlungsquelleneinrichtung, durch welche Licht zum Anregen des nachzuweisenden Fluoreszenzfarbstoffs auf die auf eine Tragereinrichtung aufgebrachte Probe einstrahlbar ist, und einer Detektionseinrichtung zum Detektieren von Fluoreszenzstrahlung, die durch den nachzuweisenden Fluoreszenzfarbstoff emittiert worden ist. Die Erfindung zeichnet sich aus durch einen Hohlraum, der eine hochreflektive innere Oberfläche, eine erste, in Richtung zur Probe weisende Öffnung und eine zweite, der Detektionseinrichtung gegenüberliegende Öffnung aufweist.

FIG. 1

**Beschreibung**

Die Erfindung betrifft eine Vorrichtung zum Nachweis eines Fluorenszenzfarbstoffs in einer Probe, mit einer Strahlungsquelleneinrichtung, durch welche Licht zum Anregen des nachzuweisenden Fluoreszenzfarbstoffs auf die auf eine Trägereinrichtung aufgebrachte Probe einstrahlbar ist, und einer Detektionseinrichtung zum Detektieren von Fluoreszenzstrahlung, die durch den nachzuweisenden Fluoreszenzfarbstoff emittiert worden ist.

Derartige Vorrichtung, in denen die Fluoreszenzstrahlung durch eine Photomultipliereinrichtung nachgewiesen wird, werden beispielsweise für molekularbiologische oder gentechnische Untersuchungen verwendet. Dabei wird eine Probe auf einem Träger aufgebracht und mit einem fluoreszierenden Markierungsstoff vorübergehend in Kontakt gebracht. Diejenigen zu untersuchenden Stoffe, die eine Affinität zum Markierungsstoff aufweisen, binden den Markierungsstoff an sich und können folglich zur Emission von Fluoreszenzlicht angeregt werden. Durch die Anregbarkeit der Fluoreszenz wird somit die Eigenschaft des zu untersuchenden Stoffs, den Markierungsstoff an sich zu binden, sichtbar, wodurch Rückschlüsse auf die Art des Probenstoffs gezogen werden können.

Ein Nachteil der aus dem Stand der Technik bekannten Vorrichtungen liegt allerdings dann, daß die Fluoreszenzstrahlung, die keine Vorzugsrichtung aufweist und daher in den gesamten Raumwinkel abgestrahlt wird, mit einer Photomultipliereinrichtung nur aus einem kleinen Raumwinkelbereich nachgewiesen werden kann. Folglich zeigen die bekannten Vorrichtungen nur eine sehr kleine Nachweisempfindlichkeit.

Angesichts dieses Nachteils der Vorrichtungen gemäß dem Stand der Technik liegt der Erfindung die Aufgabe zugrunde, die bekannte Vorrichtung zum Nachweis eines Fluoreszenzfarbstoffs dahingehend zu verbessern, daß ihre Nachweisempfindlichkeit erhöht wird.

Diese Aufgabe wird durch eine Vorrichtung der eingangs genannten Art gelöst, die sich auszeichnet durch einen Hohlraum, der eine hochreflektive innere Oberfläche, eine erste, in Richtung zur Probe weisende Öffnung und eine zweite, der Detektionseinrichtung gegenüberliegende Öffnung aufweist.

Dadurch, daß die Einrichtung zum Anregen des nachzuweisenden Fluoreszenzfarbstoffs, auf deren Oberfläche die Probe aufgebracht ist, der ersten Öffnung des Hohlraums gegenüberliegt, wird die Fluoreszenzstrahlung aus einem großen Raumwinkel in den Hohlraum emittiert. Da der Hohlraum weiterhin eine hochreflektive innere Oberfläche aufweist, kann sich die in den Hohlraum eingestrahlte Strahlung dort solange ausbreiten, bis sie von einem Detektor nachgewiesen wird.

Demnach ist es im Vergleich zum Stand der Technik möglich, die Fluoreszenzstrahlung aus einem wesentlich größeren Raumwinkel nachzuweisen, wodurch die Nachweisempfindlichkeit der Vorrichtung gegenüber den bekannten Vorrichtungen stark erhöht wird.

Gemäß einer bevorzugten Ausgestaltung der Erfindung umfaßt die hochreflektive Oberfläche Bariumsulfat oder Spektralon. Derartige Oberflächen weisen eine Reflektivität von bis zu 99,8 % auf. Demnach können die Reflexionsverluste in dem Hohlraum sehr klein gehalten werden.

Entsprechend einer bevorzugten Weiterbildung kann die Strahlungsquelleneinrichtung so vorgesehen werden, daß sie monochromatisches Licht, insbesondere Laserlicht, emittiert. Der Vorteil von monochromatischem Licht liegt darin, daß der Einfluß von monochromatischem Licht auf das emittierte Fluoreszenzlicht wesentlich besser, beispielsweise durch gezielte Absorption, kontrollierbar ist. Der Vorteil an Laserlicht ist die relativ hohe Spotintensität, die mit dem Laserlicht erzielt werden kann. Demnach resultieren entsprechend hohe Anregungsraten des nachzuweisenden Fluoreszenzfarbstoffs.

Weiterhin kann nach der Strahlungsquelleneinrichtung eine Strahlformungseinrichtung, insbesondere eine Strahlaufweitungseinrichtung, vorgesehen werden. Durch diese Maßnahme ist es möglich, den von der Stahlungsquelleneinrichtung emittierten Lichtstrahl an die Abmessungen der erwünschten Laser-Spotgröße anzupassen.

Gemäß einer bevorzugten Weiterbildung kann zwischen der Strahlungsquelleneinrichtung und der Trägereinrichtung eine Abtasteinrichtung vorgesehen werden, mittels der von der Strahlungsquelle emittierte Strahlen über die Trägereinrichtung führbar sind. Hierdurch ist es möglich eine Mehrzahl von Proben, die flächen- bzw. feldartig auf der Trägereinrichtung aufgebracht sind, sequentiell zur Fluoreszenz anzuregen und die resultierende Fluoreszenzstrahlung zu detektieren, ohne einen zeitaufwendigen Probenwechsel, einschließlich Reinigung der Trägereinrichtung und dergleichen, oder eine mechanische Verschiebung der Probe gegenüber der Trägereinrichtung durchführen zu müssen.

Gemäß einer weiteren vorteilhaften Ausführungsform ist eine Fokussierungsoptik zur Fokussierung des Anregungslichts auf der Probe vorgesehen. Dadurch kann die Spot-intensität des Anregungslichts weiter erhöht werden, wodurch die Auflösung und Intensität des Sekundärlichts gesteigert wird.

Vorteilhafterweise handelt es sich bei der Fokussierungsoptik um ein F/θ-Objektiv, bei dem eine Abbildung des Abtaststrahlbündels gemäß der sogenannten F/θ-Bedingung $y' = F \times \theta$ durchgeführt wird, wobei $y'$ die Abbildungskoordinate, F die Brennweite und θ der Winkel ist, den das Abtaststrahlenbündel mit der optischen Achse einschließt. Hierdurch können Lichtstrahlbündel unabhängig von dem Abstand zur optischen Achse fokussiert werden, und demnach kann der Fokussierungseffekt gegenüber herkömmlichen Objektiven verstärkt werden. Demnach wird eine Winkeländerung des Ablenkspiegels in eine proportionale Ablage y' umgesetzt.

Gemäß einer anderen vorteilhaften Weiterbildung aller zuvor genannten Ausbildungen, kann eine Strahlteilereinrichtung derart vorgesehen werden, daß durch die Strahlteilereinrichtung ein Teil des von der Strahlungsquelleneinrichtung emittierten Lichts auf die Probe lenkbar und ein Teil der durch den nachzuweisenden Fluoreszenzfarbstoff emittierten Fluoreszenzstrahlung in den Hohlraum führbar ist. Durch diese Maßnahme kann ein kompakter und gut bedienbarer Aufbau der erfindungsgemäßen Vorrichtung realisiert werden.

In diesem Zusammenhang kann die Strahlteilereinrichtung in Form eines dichroitischen Strahlteilers vorgesehen werden, der einerseits die Anregungsstrahlung mit hoher Effizienz reflektiert und somit den größten Teil des Anregungslichts zur Probe umlenkt und andererseits die Fluoreszenzstrahlung mit hoher Effizienz durchläßt und somit in den Hohlraum führt.

Gemäß einer weiteren bevorzugten Ausgestaltung der vorliegenden Erfindung können weitere Detektionseinrichtungen in entsprechenden, jeder weiteren Detektionseinrichtung gegenüberliegenden Öffnungen in dem Hohlraum vorgesehen sein.

Diese weiteren Einrichtungen können zum Detektieren von Fluoreszenzstrahlung vorgesehen werden, die von verschiedenen Anregungsniveaus des nachzuweisenden Fluoreszenzfarbstoffs resultieren und demnach verschiedene Wellenlängen aufweisen.

Somit gestattet diese Anordnung die Messung eines Farbstoffs bei einer Anregungswellenlänge, aber gleichzeitig bei verschiedenen Wellenlängen der Fluoreszenzstrahlung. Da derartige gleichzeitige Messungen der Fluoreszenzstrahlung bei verschiedenen Wellenlängen mit den bekannten Vorrichtungen nur mit sehr hohem Aufwand möglich sind, kann gemäß der Erfindung die Zeit zur Durchführung der Messung der Fluoreszenzstrahlung mit verschiedenen Wellenlängen um einen Faktor N auf einfache Weise verringert werden, wenn N die Anzahl der verschiedenen Wellenlängen der Fluoreszenzstrahlung bezeichnet.

Weiterhin können gemäß dieser bevorzugten Weiterbildung die weiteren Detektionseinrichtungen zum gleichzeitigen Nachweis weiterer Fluoreszenzfarbstoffe verwendet werden. Demnach ist es möglich, mit verschiedenen Anregungswellenlängen die Fluoreszenzstrahlung verschiedener Fluoreszenzfarbstoffe gleichzeitig zu messen. Ebenso wie in der Anordnung zur Messung der Fluoreszenzstrahlung bei verschiedenen Wellenlängen eines Fluoreszenzfarbstoffs ergibt sich auch in dem Fall der Messung mehrerer Fluoreszenzfarbstoffe eine Verringerung der Meßzeit mit einem Faktor N, wenn mit N die Anzahl der gleichzeitig nachzuweisenden Fluoreszenzfarbstoffe bezeichnet ist.

Gemäß einer weiteren bevorzugten Ausbildung ist eine Kombination der beiden oben bezeichneten Messungen möglich. Demnach kann die Fluoreszenzstrahlung mehrerer Fluoreszenzfarbstoffe bei jeweils verschiedenen Wellenlängen nachgewiesen werden.

Entsprechend einer bevorzugten Weiterbildung sind die Detektionseinrichtungen lichtdicht in ihren entsprechenden Öffnungen in dem Hohlraum vorgesehen. Hierdurch wird eine weitere Verlustquelle und Streulicht für die Fluoreszenzstrahlung beseitigt.

Gemäß einer bevorzugten Weiterbildung kann jede Detektionseinrichtung eine Photomultipliereinrichtung aufweisen. Weiterhin kann jede Detektionseinrichtung eine Farbfiltereinrichtung umfassen, die auf die Wellenlänge der von ihr nachzuweisenden Fluoreszenzstrahlung abgestimmt ist. Bei Bedarf kann jede Detektionseinrichtung mit einer Kollimationsoptik versehen werden.

Gemäß einer weiteren bevorzugten Ausbildung kann vor der ersten Öffnung des Hohlraums eine Sperrfiltereinrichtung vorgesehen werden, die das zur Anregung verwendete Licht sperrt und die zu detektierende Fluoreszenzstrahlung hindurchläßt. Durch diese Maßnahme kann vermieden werden, daß das zur Anregung verwendete Laserlicht in den Hohlraum gestreut wird und dort die Detektion der Fluoreszenzstrahlung ungünstig beeinflußt. Derartige Sperrfiltereinrichtungen lassen sich insbesondere bei Verwendung von monochromatischem Licht besonders einfach, beispielsweise in Form von Ablauffiltern und/oder Interferenzfiltern, vorsehen.

Vorteilhafterweise kann eine derartige Sperrfiltereinrichtung durch ein im Stand der Technik bekanntes Interferenzfilter und/oder Anlauffilter realisiert werden.

Weitere Vorteile und Merkmale der Erfindung ergeben sich aus der folgenden beispielhaften Beschreibung bevorzugter Ausführungsformen der Erfindung unter Bezugnahme auf die Zeichnungen. Es zeigen:

Fig. 1    eine schematische Darstellung einer ersten Ausführungsform der vorliegenden Erfindung; und

Fig. 2    eine schematische Darstellung einer zweiten Ausführungsform der vorliegenden Erfindung.

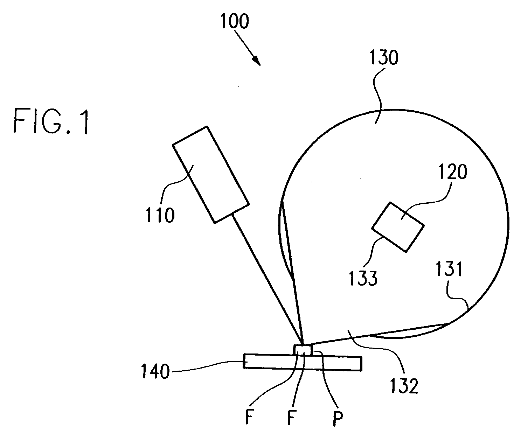

In Fig. 1 ist eine erste Ausführungsform einer Vorrichtung 100 zum Nachweis eines Fluoreszenzfarbstoffs F in einer Probe P gemäß der vorliegenden Erfindung gezeigt.

Die Vorrichtung 100 umfaßt eine Strahlungsquelleneinrichtung 110, eine Trägereinrichtung 140, auf welche die den nachzuweisenden Fluoreszenzfarbstoff F enthaltende Probe P aufgebracht ist, sowie einen Hohlraum 130, der vorliegend kugelförmig ausgebildet ist. Dieser Hohlraum 130 weist eine erste Öffnung 132 auf, die der Trägereinrichtung 140 mit der Probe P gegenüberliegend angeordnet ist.

Der Hohlraum 130 umfaßt eine hochreflektive innere Oberfläche 131, die beispielsweise Bariumsulfat oder Spektralon umfassen. Durch diese spezielle Beschichtung kann eine Reflektivität der inneren Oberfläche von 99,8 % erzielt werden.

Außerdem ist in dem Hohlraum 130 eine zweite Öffnung 133 vorgesehen, in die eine Detektionseinrichtung 120 zum Detektieren von Fluoreszenzstrahlung, die durch den nachzuweisenden Fluoreszenzfarbstoff F emittiert worden ist, beispielsweise eine Photomultipliereinrichtung, eingesetzt.

Im folgenden wird kurz die Funktionsweise der Vorrichtung 100 beschrieben.

Durch die Strahlungsquelleneinrichtung 110 wird Licht, das die Anregungswellenlänge enthält oder monochromatisches Licht der Anregungswellenlänge, beispielsweise Laserlicht, auf die Probe P eingestrahlt.

Dieses Licht wird zur Anregung des Fluoreszenzfarbstoffs F genützt.

Die von dem angeregten Fluoreszenzfarbstoff abgegebene Fluoreszenzstrahlung wird in den Hohlraum 130 eingestrahlt, und schließlich nach mehreren diffusen Reflexionen an der hochreflektiven Oberfläche 131 durch den Detektor 120 nachgewiesen.

Da die Probe der Öffnung des Hohlraums 132 gegenüberliegt und außerdem die Fluoreszenzstrahlung im allgemeinen keine Vorzugsrichtung hat, wird in der vorliegenden Anordnung im Vergleich zum Stand der Technik ein wesentlich größerer Teil der Fluoreszenzstrahlung in den Hohlraum 130, wo sie schließlich nachgewiesen werden kann, eingestrahlt.

Folglich kann in der Vorrichtung 100, im Vergleich zu aus dem Stand der Technik bekannten Vorrichtungen, in denen Linsensysteme oder Lichtleiter mit entsprechenden Detektoren eingesetzt werden, der Raumwinkel, aus dem Fluoreszenzstrahlung gesammelt wird, stark erhöht werden, wodurch eine erhöhte Nachweisempfindlichkeit erzielt werden kann.

Die in Fig. 1 gezeigte Vorrichtung 100 kann auf vielfältige Weise modifiziert werden.

Beispielsweise kann der Hohlraum 130 auch andere geometrische Formen, wie beispielsweise eine Würfelform oder dergleichen, aufweisen. Im Vergleich zu der in Fig. 1 gezeigten kugelförmigen Anordnung kann sich allerdings die Anzahl der Reflexionen der Fluoreszenzstrahlung in dem Hohlraum bis zum Nachweis durch den Detektor erhöhen, wodurch sich u. U. die Reflexionsverluste in dem Hohlraum erhöhen können. Weiterhin kann auch eine ungleichmäßige Ausleuchtung resultieren.

Der Detektor 120 ist in der vorliegenden Ausführungsform in Form eines Photomultipliers vorgesehen. Vorzugsweise kann vor diesen Photomultiplier eine Farbfiltereinrichtung gesetzt werden, die auf die von dem nachzuweisenden Fluoreszenzfarbstoff F emittierte Wellenlänge abgestimmt ist.

Falls die Reflexionsverluste in dem Hohlraum 130 weiter reduziert werden sollen, bietet es sich an, den Detektor 120 lichtdicht in die Öffnung 133 einzusetzen.

Weiterhin kann, falls es erforderlich ist, der Detektor mit einer Kollimationsoptik versehen werden.

Während in der im Zusammenhang mit Fig. 1 beschriebenen Ausführungsform lediglich ein monochromatischer Strahl auf die Probe P eingestrahlt wird, kann die in Fig. 1 gezeigte Vorrichtung auch mit zwei oder mehreren Anregungswellenlangen betrieben werden. Hierzu können weitere Strahlungsquelleneinrichtungen vorgesehen werden, die Anregung kann in der Frequenzdomäne moduliert werden, und die Fluoreszenzstrahlung mit derjeweiligen Frequenz durch eine entsprechend gesteuerte Detektionseinrichtung detektiert werden.

Um die beschriebene Vorrichtung zum Nachweis von Fluoreszenzstrahlung eines bestimmten Fluoreszenzfarbstoffs einzusetzen, ist lediglich die Anregungslichtquelle und, falls vorgesehen, das Farbfilter vor der Photomultipliereinrichtung an den Fluoreszenzfarbstoff anzupassen.

Zum Nachweis von Fluoreszein, das bei 488 nm zur Fluoreszenz angeregt werden kann, muß Licht dieser Wellenlänge, beispielsweise durch einen Argonlaser auf die Probe gestrahlt werden. Da die Fluoreszenzstrahlung bei 520 nm emittiert wird, müßte ein verwendeter Farbfilter in diesem Bereich durchlässig sein. Analoges gilt für CY5, das bei 633 nm angeregt werden kann und bei 670 nm Fluoreszenzstrahlung emittiert.

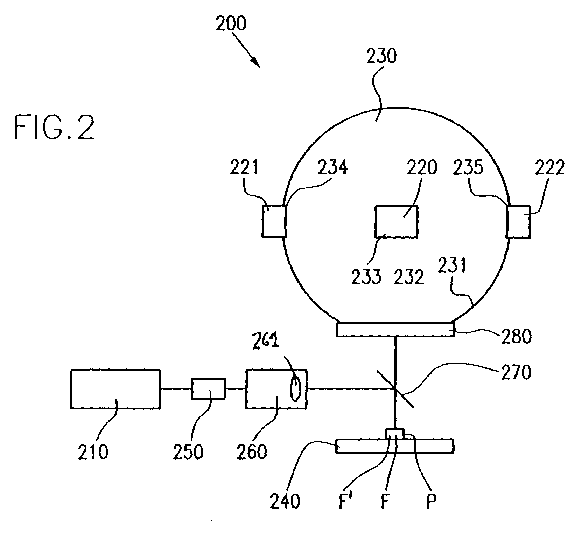

In Fig. 2 ist eine zweite Ausführungsform einer Vorrichtung 200 zum Nachweis eines Fluoreszenzfarbstoffs F in einer Probe P dargestellt.

Diese Vorrichtung unterscheidet sich von der in Fig. 1 gezeigten dadurch, daß zusätzlich zu einer ersten Detektionseinrichtung 220 weitere Detektionseinrichtungen 221 und 222, eine Strahlaufweitungseinrichtung 250, eine Abtasteinrichtung 260, eine Strahlteilereinrichtung 270 und ein Sperrfilter 280 vorgesehen sind.

Um Wiederholungen zu vermeiden, werden im folgenden lediglich diese unterschiedlichen Merkmale erläutert und in bezug auf die verbleibenden Komponenten wird lediglich auf die Beschreibung im Zusammenhang mit Fig. 1 verwiesen. Hierbei bleibt anzumerken, daß sich die Bezugszeichen der einander entsprechenden Komponenten lediglich in ihrer ersten Ziffer unterscheiden.

In der zweiten Ausführungsform sind zwei Detektoren 221 und 222, die in entsprechenden Öffnungen 234 bzw. 235 in dem Hohlraum 230 eingesetzt sind, vorgesehen.

Die Detektoren 221 und 222 können baugleich mit dem Detektor 220 ausgebildet sein oder speziell an eine Fluoreszenzstrahlung angepaßt werden, die sich in ihrer Wellenlänge von der mit dem Detektor 220 nachzuweisenden Fluoreszenzstrahlung unterscheidet.

Obwohl in der Ausführungsform gemäß Fig. 2 nur drei Detektoren 220, 221 und 222 gezeigt sind, ist es offensichtlich, daß weitere Detektoren vorgesehen werden können.

Mit dieser Anordnung ist es einerseits möglich, Fluoreszenzstrahlung von dem gleichen Fluoreszenzfarbstoff F, die aus unterschiedlichen Anregungszuständen resultiert, nachzuweisen.

Alternativ können, wie in Fig. 2 gezeigt, die Detektoren auch so vorgesehen werden, daß sie zum gleichzeitigen Nachweis wenigstens eines weiteren Fluoreszenzfarbstoffs F' vorgesehen sind. Hierzu kann es erforderlich sein, Licht mit verschiedenen Anregungswellenlängen auf die Probe P einzustrahlen.

Selbstverständlich sind auch beliebige Kombinationen aus den beiden oben beschriebenen Betriebsverfahren möglich; d.h. mit einer derartigen Anordnung kann die Fluoreszenzstrahlung mehrerer Fluoreszenzfarbstoffe F und F' mit jeweils verschiedenen Wellenlängen detektiert werden.

Weiterhin weist die Vorrichtung 200 eine Strahlformungseinrichtung in Form einer Strahlaufweitungseinrichtung 250 auf. Durch diese Einrichtung kann der von der Strahlungsquelleneinrichtung emittierte Strahl aufgeweitet werden und dadurch die Fokussierung im Zusammenhang mit der noch zu beschreibenden Fokussieroptik verbessert werden.

Neben der gezeigten Strahlaufweitungseinrichtung 250 können, falls dies aufgrund der Probengeometrie erforderlich ist, auch andere Strahlformungseinrichtungen, beispielsweise eine Lochblende und dergleichen, eingesetzt werden.

An die Strahlaufweitungseinrichtung 250 schließt sich die Abtasteinrichtung 260 an. Mittels dieser Abtasteinrichtung 260 kann ein von der Strahlungsquelleneinrichtung 210 emittierter Strahl in zwei Dimensionen über die Trägereinrichtung geführt werden. Durch diese Anordnung ist es möglich, eine Mehrzahl von Proben, die feldartig auf der Trägereinrichtung aufgebracht sind, sequentiell zur Fluoreszenz anzuregen, ohne einen zeitaufwendigen Probenwechsel, einschließlich Reinigung der Trägereinrichtung 240 und dergleichen, durchführen zu müssen.

Die Abtasteinrichtung 260 umfaßt weiterhin eine Fokussierungsoptik 261 zur Fokussierung des Anregungslichts auf die Probe. Dadurch kann die Spotintensität des Anregungslichts weiter erhöht werden, und demnach auch die räumliche Auflösung und Bestrahlungsstärke des Fluoreszenzlichts gesteigert werden.

Vorteilhafterweise kann als Fokussierungsoptik ein F/θ-Objektiv, bei dem eine Abbildung des Abtaststrahlenbündels gemäß der sogenannten F/θ-Bedingung $y' = F \times \theta$ durchgeführt wird, wobei $y'$ die Abbildungskoordinate, F die Brennweite und θ der Winkel ist, den das Abtaststrahlenbündel mit der optischen Achse einschließt, eingesetzt werden.

Hierdurch können Lichtstrahlbündel unabhängig von dem Abstand zur optischen Achse fokussiert werden. Der Fokussiereffekt läßt sich demnach gegenüber einem herkömmlichen Objektiv verstärken. Außerdem kann mit einem derartigen F/θ-Objektiv eine gleichmäßigere Fokussierung über die Fläche, in der die Probe vorgesehen ist, erzielt werden.

Weiterhin umfaßt die zweite Ausführungsform eine Strahlteilereinrichtung 270. Die Strahlteilereinrichtung ist zwischen der Trägereinrichtung 240 für die Probe und der Öffnung 232 des Hohlraums vorgesehen. Durch die Strahlteilereinrichtung 270 wird einerseits ein Teil des von der Strahlungsquelleneinrichtung 210 emittierten Lichts auf die Probe P gelenkt. Andererseits läßt die Strahlteilereinrichtung einen Teil der durch den nachzuweisenden Fluoreszenzfarbstoff F emittierten Fluoreszenzstrahlung hindurch, so daß diese Strahlung in den Hohlraum 230 eintreten und dort durch den Detektor 230 bzw. die Detektoren 231 und 222 nachgewiesen werden kann.

Vorteilhafterweise kann die Strahlteilereinrichtung 270 einen dichroitischen Strahlteiler umfassen. Dieser spezielle Strahlteiler ist so ausgelegt, daß er zum einem die Anregungsstrahlung mit hoher Effizienz reflektiert und somit den größten Teil des Anregungslichts zur Probe umlenkt und zum anderen die Fluoreszenzstrahlung mit hoher Effizienz durchläßt.

Darüber hinaus ist in der zweiten Ausführungsform vor der Öffnung 232 des Hohlraums 230 eine Sperrfiltereinrichtung 280 vorgesehen. Diese Sperrfiltereinrichtung 280 ist für das zur Anregung verwendete Licht, das in Richtung des Hohlraums 230 gestreut wird, undurchlässig und für die zu detektierende Fluoreszenzstrahlung durchlässig. Derartige Sperrfiltereinrichtungen lassen sich beispielsweise durch ein Interferenzfilter, ein Anlauffilter oder eine Kombination derartiger Filter realisieren.

Durch diese Sperrfiltereinrichtung 280 kann darüber hinaus selbst der Anteil der Laserstrahlung, der trotz der Strahlteilereinrichtung 270 in Richtung des Hohlraums geführt wird, geblockt werden, so daß nur die Strahlung, die durch den Fluoreszenzfarbstoff F emittiert worden ist, in den Hohlraum gestrahlt wird.

Obwohl in der zweiten Ausführungsform die zusätzlichen Detektoren 221 und 222, die Strahlaufweitungseinrichtung 250, die Abtasteinrichtung 260, die Strahlteilereinrichtung 270 und die Sperrfiltereinrichtung 240 gemeinsam in einer Ausführungsform gezeigt worden sind, bleibt anzumerken, daß diese Merkmale voneinander unabhängig sind und demnach jedes einzelne dieser Merkmale bei Bedarf eingesetzt werden kann, um die im Zusammenhang mit dem betreffenden Merkmal beschriebenen Vorteile zu erlangen.

**Patentansprüche**

1.  Vorrichtung (100; 200) zum Nachweis eines Fluorenszenzfarbstoffs (F) in einer Probe (P), mit

    einer Strahlungsquelleneinrichtung (110; 210), durch welche Licht zum Anregen des nachzuweisenden Fluoreszenzfarbstoffs (F) auf die auf eine Trägereinrichtung (140; 240) aufgebrachte Probe (P) einstrahlbar ist, und

einer Detektionseinrichtung (120; 220) zum Detektieren von Fluoreszenzstrahlung, die durch den nachzuweisenden Fluoreszenzfarbstoff (F) emittiert worden ist,
**gekennzeichnet durch**

einen Hohlraum (130; 230), der eine hochreflektive innere Oberfläche (131; 231), eine erste, in Richtung zur Probe weisende Öffnung (132; 232) und eine zweite, der Detektionseinrichtung (120; 220) gegenüberliegende Öffnung (133; 233) aufweist.

2. Vorrichtung nach Anspruch 1, in welcher der Hohlraum (130; 230) im wesentlichen kugelförmig ausgebildet ist.

3. Vorrichtung nach einem der vorangegangenen Ansprüche, in welcher die hochreflektive Oberfläche (131; 231) Bariumsulfat oder Spectralon umfaßt.

4. Vorrichtung nach einem der vorangegangenen Ansprüche, in welcher die Strahlungsquelleneinrichtung (110; 210) monochromatisches Licht emittiert.

5. Vorrichtung nach Anspruch 4, in welcher das monochromatische Licht Laserlicht ist.

6. Vorrichtung nach einem der vorangegangenen Ansprüche, in welcher nach der Strahlungsquelleneinrichtung (210) eine Strahlformungseinrichtung, insbesondere eine Strahlaufweitungseinrichtung (250), vorgesehen ist.

7. Vorrichtung nach einem der vorangegangenen Ansprüche, in welcher zwischen der Strahlungsquelleneinrichtung (210) und der Trägereinrichtung (240) eine Abtasteinrichtung (260) vorgesehen ist, mittels der von der Strahlungsquelle emittierte Strahlen über die Trägereinrichtung führbar sind.

8. Vorrichtung nach Anspruch 7, in welcher die Abtasteinrichtung (260) eine Fokussieroptik zur Fokussierung der von der Strahlungsquelle emittierten Strahlen auf die Probe (P) aufweist.

9. Vorrichtung nach Anspruch 8, in welcher die Fokussieroptik ein F/θ-Objektiv aufweist.

10. Vorrichtung nach einem der vorangegangenen Ansprüche, in welcher eine Strahlteilereinrichtung (270) vorgesehen ist, derart, daß durch die Strahlteilereinrichtung (270) ein Teil des von der Strahlungsquelleneinrichtung (210) emittierten Lichts auf die Probe (P) lenkbar und ein Teil der durch den nachzuweisenden Fluoreszenzfarbstoff (F) emittierten Fluoreszenzstrahlung in den Hohlraum (230) führbar ist.

11. Vorrichtung nach Anspruch 10, in welcher die Strahlteilereinrichtung (270) in Form eines dichroitischen Strahlteilers vorgesehen ist.

12. Vorrichtung nach einem der vorangegangenen Ansprüche, in welcher wenigstens eine weitere Detektionseinrichtung (221, 222) und eine entsprechende jeder weiteren Detektionseinrichtung gegenüberliegende Öffnung (234, 235) in dem Hohlraum (230) vorgesehen ist.

13. Vorrichtung nach Anspruch 12, in welcher die wenigstens eine weitere Detektionseinrichtung (221, 222) zum Detektieren von Fluoreszenzstrahlung vorgesehen ist, welche durch den nachzuweisenden Fluoreszenzfarbstoff (F) emittiert worden ist und deren Wellenlänge sich von der Fluoreszenzstrahlung, die von der Detektionseinrichtung (220) nachzuweisen ist, unterscheidet.

14. Vorrichtung nach Anspruch 12 oder 13, in welcher die wenigstens eine weitere Detektionseinrichtung (221, 222) zum gleichzeitigen Nachweis wenigstens eines weiteren Fluorenszenzfarbstoffs (F') vorgesehen ist.

15. Vorrichtung nach einem der vorangegangenen Ansprüche, in welcher jede Detektionseinrichtung (120; 220, 221, 222) lichtdicht in der ihr entsprechenden zweiten Öffnung (133; 233, 234, 235) in dem Hohlraum (130; 230) vorgesehen ist.

16. Vorrichtung nach einem der vorangegangenen Ansprüche, in welcher jede Detektionseinrichtung (120; 220, 221, 222) eine Photomultipliereinrichtung aufweist.

17. Vorrichtung nach Anspruch 16, in welcher jede Detektionseinrichtung (120; 220, 221, 222) eine auf die Wellenlänge der von ihr nachzuweisenden Fluoreszenzstrahlung abgestimmte Farbfiltereinrichtung aufweist.

18. Vorrichtung nach einem der vorangegangenen Ansprüche, in welcher jeder jede Detektionseinrichtung (120; 220, 221, 222) eine Kollimationsoptik aufweist.

19. Vorrichtung nach einem der vorangegangenen Ansprüche, in welchem vor der ersten Öffnung des Hohlraums eine Sperrfiltereinrichtung (280), die für das zur Anregung verwendete Licht undurchlässig und für die zu detektierende Fluoreszenzstrahlung durchlässig ist, vorgesehen ist.

20. Vorrichtung nach Anspruch 19, in welcher die Sperrfiltereinrichtung (280) ein Interferenzfilter und/oder ein Anlauffilter aufweist.

FIG.1

EP 0 950 893 A2

FIG.2